# EUROPÄISCHE PATENTSCHRIFT

(11) **EP 1 907 195 B1**
(45) Veröffentlichungstag und Bekanntmachung des Hinweises auf die Patenterteilung: **11.03.2009**
(21) Anmeldenummer: 06792549.5
(22) Anmeldetag: 24.07.2006
(51) Int. Cl.: B29C 70/54, B29B 11/16, D04H 13/00, B29C 70/48, B29K 105/10

(54) **VERFAHREN ZUR HERSTELLUNG VON EIN-ODER MEHRSCHICHTIGEN FASERVORFORMLINGEN IM TFP-VERFAHREN**
METHOD FOR PRODUCING ONE- OR MULTI-LAYER FIBRE PREFORMS WITH A TFP METHOD
PROCEDE DE PRODUCTION D'EBAUCHES FIBREUSES MONOCOUCHES OU MULTICOUCHES SELON LE PROCEDE TFP

(30) Priorität: 22.07.2005 DE 102005034395
(43) Veröffentlichungstag der Anmeldung: 09.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064569
(87) Internationale Veröffentlichungsnummer: WO 2007/010049

(56) Entgegenhaltungen:
- WO-A-02/45932
- DE-A1- 19 629 044
- ANONYMOUS: "Erläuterung zur TFP-Technologie" INTERNET CITATION, [Online] 7. März 2005 (2005-03-07), XP002400709 Gefunden im Internet: URL:http://www.hightex-dresden.de/tfptech. pdf> [gefunden am 2006-09-27]

## Beschreibung

Die Erfindung betrifft ein Verfahren zur Herstellung von ein- oder mehrschichtigen Faservorformlingen im TFP-Verfahren ("Tailored Fiber Placement") mit im Wesentlichen kraftflussorientiert ausgerichteten Fasersträngen, die auf einer Tragschicht abgelegt und mit Fixierfäden, insbesondere mit mindestens einem Fixieroberfaden und mindestens einem Fixierunterfaden, angeheftet werden, um einen Faservorformling mit einer nahezu beliebigen Materialstärke zu bilden.

Im Leichtbau, insbesondere im Flugzeugbau, finden zunehmend Verbundbauteile aus faserverstärkten Kunststoffen Verwendung, die mechanisch extrem belastbar sind und gleichzeitig ein hohes Gewichtseinsparungspotential bieten. Diese Bauteile werden mit Verstärkungsfasern gebildet, die anschließend zur Bildung des fertigen Bauteils mit einem aushärtbaren Kunststoffmaterial, beispielsweise einem Polyesterharz, einem Epoxydharz oder dergleichen, durchtränkt bzw. imprägniert werden. Im Gegensatz zu den bislang im Wesentlichen für tragende Konstruktionselemente eingesetzten metallischen Materialien, weisen faserverstärkte Verbundmaterialien sehr stark richtungsabhängige mechanische Eigenschaften auf.

Die Ausrichtung der Verstärkungsfasern in einem derartigen Bauteil hat daher maßgeblichen Einfluss auf dessen Steifigkeit und Festigkeit. Die Verstärkungsfasern sollen, um optimale mechanische Eigenschaften zu erreichen, möglichst der Belastungsrichtung folgen und keine Welligkeit aufweisen, das heißt gestreckt verlaufen. Darüber hinaus ist eine gleichmäßige mechanische Beanspruchung der einzelnen Verstärkungsfasern anzustreben.

Mit konventionellen Halbzeugen, wie z. B. Geweben oder Gelegen zur Verstärkung des Kunststoffmaterials, sind nicht alle denkbaren Faserorientierungen realisierbar, da die Verstärkungsfasern dort im Allgemeinen in einer bestimmten, festgelegten Orientierung angeordnet sind. Fasergelege lassen sich zwar "drapieren", das heißt in der Ebene ohne Faltenwurf, beispielsweise zu Kreisringsegmenten oder dergleichen, ablegen, doch lassen sich die darin enthaltenen Verstärkungsfasern im Allgemeinen nicht dem Verlauf komplexerer Kraftflusslinien angleichen.

Eine Möglichkeit, der Forderung nach einer belastungsgerechten Faserausrichtung nachzukommen, ist das bekannte TFP-Verfahren. Hierbei werden Faserstränge zur mechanischen Verstärkung ("Rovings"), die wiederum mit einer Vielzahl von parallel zueinander verlaufenden diskreten Verstärkungsfasern gebildet sind, entlang einer beliebigen Bahnkurve abgelegt und mit Hilfe von Fixierfäden auf einer Tragschicht zur Bildung eines Faservorformlings ("Preform") angeheftet, wodurch die Ausrichtung der einzelnen Faserstränge nahezu optimal dem auf das fertige Verbundbauteil einwirkenden Kraftfluss anpassbar ist. Die Fixierung erfolgt hierbei durch einen Fixieroberfaden und einen Fixierunterfaden, die unterhalb der Tragschicht - in Entsprechung zu konventionellen Nähverfahren - unter Schlaufenbildung miteinander verkettet werden. Die Anheftung der Faserstränge erfolgt hierbei zum Beispiel mit üblichen Zickzackstichen. Durch die so erzielte optimale Ausnutzung der mechanischen Belastbarkeit der Faserstränge kann deren Anzahl und somit auch das Gewicht des Faservorformlings erheblich verringert werden. Zudem kann der Bauteilquerschnitt den jeweiligen lokalen Belastungen in idealer Weise angepasst werden. Weiterhin lassen sich gezielt Verstärkungen in besonders beanspruchten Zonen, wie zum Beispiel Krafteinleitungsbereichen oder dergleichen, durch die Ablage von zusätzlichen Fasersträngen bilden. Als Verstärkungsfasern finden beispielsweise Glasfasern, Kohlefasern, Aramidfasern oder dergleichen Verwendung.

Die Fertigung von Faservorformlingen mittels des TFP- Verfahrens erfolgt auf üblichen CNC- gesteuerten Näh- bzw. Stickautomaten, die beispielsweise auch in der Textilindustrie Verwendung finden. Sind alle erforderlichen Lagen mit Fasersträngen abgelegt und auf der Tragschicht angeheftet, so wird der fertige Faservorformling, der in der Regel schon die gewünschte Endkontur bzw. Endform aufweist, in eine verschließbare Form eingelegt, mit einem aushärtbaren Kunststoffmaterial imprägniert und abschließend zum fertigen Verbundbauteil ausgehärtet. Hierbei können mehrere TFP- Faservorformlinge und/oder Lagen aus Verstärkungsgeweben kombiniert werden. Mehrschichtige Faservorformlinge werden durch das Übereinanderschichten von mehreren (einfachen, einschichtigen) Faservorformlingen gebildet, so dass höhere Materialstärken realisierbar sind, die ansonsten aufgrund der begrenzten Nadellänge in den für das TFP-Verfahren benutzten Näh- bzw. Stickautomaten nicht gefertigt werden könnten. Mehrschichtige Faservorformlinge weisen demgemäß mindestens zwei, innerhalb des mehrschichtigen Faservorformlings in etwa parallel zueinander verlaufende Tragschichten auf.

Die Imprägnierung der Faservorformlinge mit dem aushärtbaren Kunststoffmaterial kann beispielsweise mittels des bekannten RTM-Verfahrens ("Resin Transfer Moulding") in einer entsprechend gestalteten verschließbaren Form erfolgen.

Durch das TFP-Verfahren werden jedoch mit den Fixierfäden und den Tragschichten Hilfskomponenten in den Faservorformling eingebracht, die im späteren Verbundbauteil keine Funktion, insbesondere keine Tragfunktion, mehr zu erfüllen haben. Sowohl die Tragschichten als auch die Fixierfäden verursachen Probleme bei der Realisierung einer idealen Lagenabfolge und stellen zudem einen nicht zu vernachlässigenden Anteil am Gesamtgewicht dar, insbesondere wenn mehrere Faservorformlinge übereinander geschichtet werden oder wenn einschichtige Faservorformlinge mit hoher Materialstärke durch eine Vielzahl von übereinander liegenden Lagen von Fasersträngen gebildet werden. Weiterhin treten im fertigen Verbundbauteil im Bereich der Tragschichten bevorzugt Delaminationen auf. Zwar kann die Tragschicht selbst auch mit einem Verstärkungsgewebe, zum Beispiel mit einem Glas- oder Kohlefasergewebe gebildet sein, doch auch in diesem Fall weist zumindest ein Teil der Verstärkungsfasern zumeist eine nicht belastungsgerechte Ausrichtung auf. Zudem wird auch das Verstärkungsgewebe durch die Penetrierung mit der Nähnadel während des TFP-Verfahrens unter Umständen beschädigt, so dass die Werkstoffkennwerte beeinträchtigt werden können. Durch die Fixierfäden entstehen weitere Störstellen im Faservorformling, beispielsweise durch eine Wellenbildung entlang der Faserstränge infolge der Vernähung sowie durch die Schlaufenbildung infolge der Verknotung zwischen den Fixieroberfäden und den Fixierunterfäden. Sie bildet auch eine Störschicht, wenn mehrere Faservorformlinge aufeinander gelegt werden sollen.

Darüber hinaus werden mittels des TFP-Verfahrens die Fixierfäden, die Faserstränge sowie die Tragschicht durch das Vernähen fest miteinander verbunden, so dass ein Abreißen der Tragschicht vom Faservorformling, insbesondere ohne eine Beschädigung der einzelnen Verstärkungsfasern in den Fasersträngen, im Allgemeinen nicht möglich ist.

Aus der DE 100 61 028 A1 ist zwar ein Verfahren bekannt, bei dem die Fixierfäden im Faservorformling chemisch gelöst oder thermisch aufgeschmolzen werden, doch besteht auch hier die Gefahr einer Beschädigung der Faserstränge infolge des Abreißens der Nähunterlage. Die chemische Lösung der Fixierfäden kann dabei nur mit einem geeigneten Harzsystem bei der Imprägnierung des Faservorformlings erfolgen, so dass eine Beeinträchtigung der Harzmatrix nicht ausgeschlossen ist.

Die DE 196 29 044 A1 beschreibt ein Verfahren zur Herstellung einer senkrecht zur Faserrichtung verlaufenden und im Abstand voneinander liegenden Fadenbindung für die Konfektionierung von Fasergelegen für flächige Gegenstände aus Faserverbundwerkstoff.

Aufgabe der Erfindung ist es daher, ein Verfahren zur Herstellung eines Faservorformlings nach Maßgabe des TFP-Verfahrens zu schaffen, bei dem eine leichte Ablösbarkeit der Tragschicht vom Faservorformling, insbesondere ohne Beschädigung der Faserstränge gewährleistet ist, um einen Faservorformling insbesondere ohne störende Tragschichten zu bilden, der einem damit gefertigten Verbundbauteil nahezu optimale Laminateigenschaften, bei einer dennoch im Wesentlichen kraftflussorientierten Ausrichtung der Verstärkungsfasern verleiht. Zusätzlich soll der Einfluss der beim TFP-Verfahren erforderlichen Fixierfäden, insbesondere durch die Bildung von Störstellen und dergleichen, auf die mechanischen Eigenschaften des Faservorformlings verringert werden.

Die erfindungsgemäße Aufgabe wird durch ein Verfahren mit den Merkmalen des Kennzeichens des Patentanspruchs 1 gelöst.

Dadurch, dass zunächst zumindest bereichsweise eine Trennschicht auf die Tragschicht aufgebracht wird und der Faservorformling nach der Beendigung des TFP-Verfahrens in eine Fixiereinrichtung eingebracht wird, in der zumindest ein Teil der Fixierfäden durch Wärmezufuhr aufgeschmolzen wird, und anschließend die mittels der Trennschicht vom Faservorformling separierte Tragschicht vom Faservorformling abgelöst wird, kann die für die Durchführung des TFP-Verfahrens erforderliche Tragschicht ohne Beschädigung der Faserstränge des Faservorformlings von diesem abgelöst werden. Zugleich ermöglichen die aufschmelzenden Fixierfäden die Sicherung der räumlichen Lage der Faserstränge innerhalb der Fixiereinrichtung, so dass der Faservorformling nach dem zumindest teilweisen Aufschmelzen der Fixierfäden zum Ablösen der Tragschicht, die durch die Trennschicht vom Faservorformling separiert ist, ohne wesentliche Formveränderung aus der Fixiereinrichtung für weitere Verarbeitungsschritte entnommen werden kann.

Das erfindungsgemäßeVerfahren sieht vor, dass die Trennschicht mit einem Antihafteigenschaften aufweisenden Material gebildet wird.
Infolge dieser Trennschicht lässt sich die Tragschicht vom Faservorformling im Wesentlichen ohne eine Beschädigung der Faserstränge im Faservorformling von diesem ablösen.

Nach Maßgabe einer weiteren vorteilhaften Ausgestaltung des erfindungsgemäßen Verfahrens ist vorgesehen, dass die räumliche Lage der Faserstränge in der Fixiereinrichtung vor dem zumindest teilweisen Aufschmelzen der Fixierfäden durch Anlegen eines Unterdrucks gesichert wird.
Hierdurch werden Verschiebungen von Fasersträngen innerhalb des Faservorformlings vor oder während des Aufschmelzprozesses in der Fixiereinrichtung vermieden. Die Fixiereinrichtung kann hierbei als Unterlage ausgebildet sein, deren Form dem herzustellenden Faservorformling im Wesentlichen entspricht. Der mittels des TFP-Verfahrens gebildete Faservorformling wird in eine Vakuumhülle verbracht, anschließend auf der Unterlage platziert und durch Dichtelemente mit dieser luftdicht verbunden. Durch das Anlegen eines Unterdrucks an die Vakuumhülle presst sich diese an den Faservorformling an und fixiert hierdurch die Faserstränge. Gegebenenfalls, insbesondere bei großformatigen Faservorformlingen, kann es erforderlich sein, den Faservorformling zumindest bereichsweise mit einer luftdurchlässigen Drainageschicht, beispielsweise einem luftdurchlässigen Vlies oder dergleichen, abzudecken, um den Unterdruck möglichst gleichmäßig über die gesamte Oberfläche des Faservorformlings wirken zu lassen. Alternativ können auch Hartschaumplatten mit einer offenporigen Zellstruktur verwendet werden. Um eine Verklebung des Faservorformlings mit der Innenseite der Vakuumhülle und/oder der Unterlage zu vermeiden, können auf den Faservorformling zumindest bereichsweise Trennfolien aufgelegt werden.

Nach Maßgabe einer weiteren vorteilhaften Ausgestaltung werden zumindest die Fixieroberfäden und/oder die Fixierunterfäden zur Sicherung der räumlichen Lage der Faserstränge in der Fixiereinrichtung zumindest teilweise aufgeschmolzen.
Hierdurch wird ein guter Verbund zwischen den Fasersträngen, der eine ungewollte Verschiebung der räumlichen Lage der Faserstränge weitgehend vermeidet, erzielt. Damit kann der Faservorformling nach dem Abschluss des Fixiervorgangs in der Fixiereinrichtung für nachfolgende Verarbeitungsschritte, beispielsweise das Ablösen der Tragschicht oder dergleichen, ohne die Gefahr von Verformungen aus der Fixiereinrichtung entnommen werden. Darüber hinaus werden Störstellen im Faservorformling weitgehend vergleichmäßigt bzw. eliminiert, so dass der Faservorformling nahezu optimale mechanische Eigenschaften aufweist. Derartige Störstellen entstehen beispielsweise in Gestalt einer Wellenbildung auf den Fasersträngen durch die Vernähung der Faserstränge mit den Fixierfäden. Weiterhin kann die Vernähung der Faserstränge durch die Fixieroberfäden und die Fixierunterfäden, insbesondere bei Faservorformlingen mit vielen Lagen von Fasersträngen, unterhalb der Tragschicht zu vermehrten Schlaufenbildungen und unter Umständen innerhalb des Faservorformlings zu Verknotungen führen. Derartige Störstellen werden durch das Aufschmelzen zumindest eines Teils der Fixierfäden aufgelöst. Weiterhin ermöglicht das Aufschmelzen zumindest des Fixieroberfadens in Verbindung mit der Trennschicht eine sehr leichte Ablösung der Tragschicht vom Faservorformling ohne eine Beschädigung der Faserstränge. Hierbei weist das Material der Fixierfäden im aufgeschmolzenen Zustand eine ausreichend hohe Viskosität auf, so dass ein unkontrollierter Materialeintrag in den Faservorformling nicht erfolgt.

Nach Maßgabe einer weiteren vorteilhaften Ausgestaltung wird die räumliche Lage der Faserstränge in der Fixiereinrichtung durch ein zusätzliches Bindemittel, insbesondere ein thermoplastisches Material und/oder ein duroplastisches Material, gesichert.
Hierdurch kann der Zusammenhalt der Faserstränge und damit die Formstabilität des Faservorformlings weiter verbessert werden.

Die Tragschicht weist zumindest bereichsweise mindestens eine Trennschicht auf. Dadurch lässt sich die Tragschicht vom Faservorformling leicht und vor allem ohne Beschädigung der Faserstränge innerhalb des Faservorformlings von diesem ablösen bzw. abheben.

Dadurch, dass der Faservorformling nach dem Verfahren nach einem der Ansprüche 1 bis 6 gebildet ist, weist dieser nahezu optimale mechanische Eigenschaften auf, da insbesondere keine die Homogenität des Faservorformlings beeinträchtigende Tragschicht mehr vorhanden ist und Störstellen im Faservorformling durch das zumindest teilweise Aufschmelzen der Fixierfäden weitgehend eliminiert werden, was insbesondere bei mehrschichtigen Faservorformlingen von Bedeutung ist.

Weitere vorteilhafte Ausgestaltungen des Verfahrens sind in weiteren Patentansprüchen dargelegt.

In der Zeichnung zeigt:
- **Fig.1**: eine schematische Querschnittsdarstellung durch einen mittels des TFP-Verfahrens gebildeten Faservorformling mit Trennschicht und
- **Fig. 2**: eine Fixiereinrichtung zur Durchführung des erfindungsgemäßen Verfahrens.

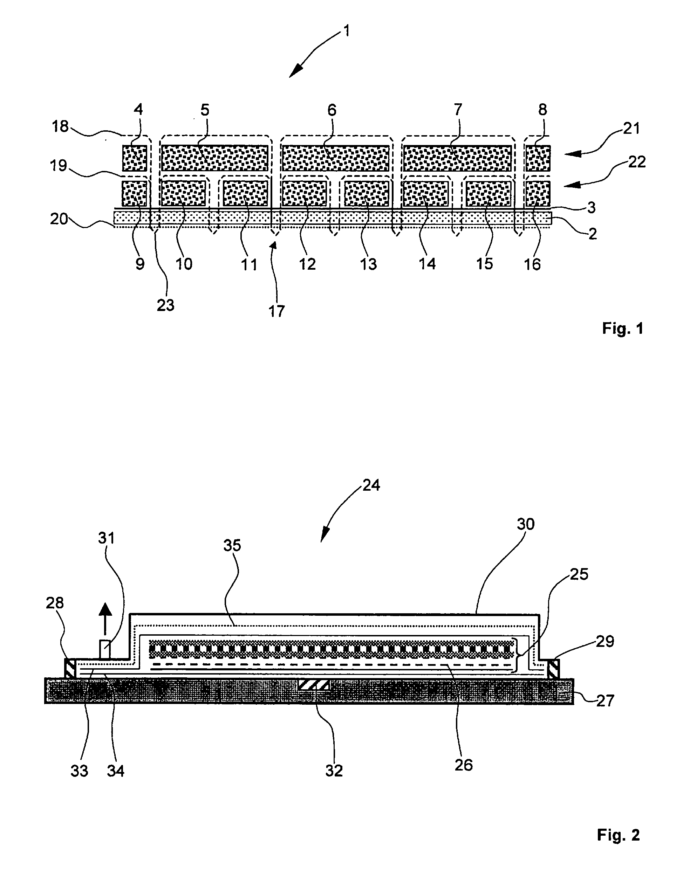

Im Weiteren sollen das erfindungsgemäße Verfahren sowie die erfindungsgemäße Tragschicht anhand der **Fig. 1,2** näher beschrieben werden.

Die **Fig. 1** zeigt eine schematische Querschnittsdarstellung durch einen mittels des TFP-Verfahrens gebildeten Faservorformling mit einer Trennschicht.

Ein Faservorformling 1 weist unter anderem eine Tragschicht 2 sowie eine darauf angeordnete Trennschicht 3 auf. Die Trennschicht 3 ist mit einer dünnschichtigen PTFE-Folie oder dergleichen gebildet, die über gute Antihafteigenschaften verfügt.

Weiterhin kann die Trennschicht 3 auch mit Folien aus anderen, über gute Antihafteigenschaften verfügenden Kunststoffen, wie zum Beispiel Polyethylen, Polypropylen oder dergleichen gebildet werden. Darüber hinaus kann die Trennschicht mit einem Flächengebilde, beispielsweise einem Gewebe gebildet sein, das mit einem Trennmittel, zum Beispiel einem Trennlack oder dergleichen versehen ist. Die Trennschicht 3 kann alternativ durch Aufsprühen oder Beschichten eines Antihaftmaterials auf die Tragschicht 2 hergestellt werden, so dass die Trennschicht 3 in diesem Fall ein integraler Bestandteil der Tragschicht 2 ist. Die Trennschicht 3 kann auch herstellerseitig auf die Tragschicht 2 aufgebracht werden.

Auf der Trennschicht 3 werden in bekannter Weise mittels des TFP-Verfahrens Faserstränge 4 bis 16 mit einer im Wesentlichen kraftflussorientierten Ausrichtung abgelegt und mittels der Fixierfäden 17 in Gestalt der Fixieroberfäden 18,19 und des Fixierunterfadens 20 an der Tragschicht 2 angeheftet. Die Faserstränge 4 bis 16 sind aus einer Vielzahl von einzelnen, parallel zueinander angeordneten Verstärkungsfasern, beispielsweise Glasfasern, Kohlefasern oder Aramidfasern, gebildet. Die Verstärkungsfasern verlaufen in der Darstellung der Fig. 1 im Wesentlichen senkrecht zur Zeichenebene. Die Faserstränge 4 bis 8 bilden innerhalb des Faservorformlings 1 eine obere Lage 21 und die Faserstränge 9 bis 16 bilden eine untere Lage 22. Die beim TFP-Verfahren zur Führung der Fixierfäden 17 üblicherweise benutzte Nadel durchdringt hierbei die Lagen 21,22 sowie die zwischen der Lage 22 und der Tragschicht 2 angeordnete Trennschicht 3 einschließlich der Tragschicht 2. Für die Herstellung des Faservorformlings 1 können bekannte, beispielsweise CNCgesteuerte Näh- bzw. Stickautomaten, eingesetzt werden, die eine Steuerung des Nähkopfes in zwei Raumdimensionen ermöglichen. Die Führung der abzulegenden Faserstränge kann mittels des Nähkopfes oder einem separaten Führungsmittel erfolgen.

Die Fixieroberfäden 18,19 und/oder Fixierunterfäden 20 sind mit einem leicht aufschmelzbaren Material, beispielsweise einem thermoplastischen Material, einem Schmelzgarn oder dergleichen gebildet. Hierbei weist das aufschmelzbare Material im aufgeschmolzenen Zustand eine so hohe Viskosität auf, dass möglichst keine unkontrollierte Verteilung innerhalb des Faservorformlings 1 erfolgt. Die Tragschicht 2 kann mit einem üblichen, für das TFP-Verfahren geeigneten Material gebildet sein, da diese zum Abschluss des Verfahrens von der Trennschicht 3 mechanisch abgelöst bzw. abgehoben wird. Im Unterschied zur Vorgehensweise bei bekannten TFP-Verfahren befindet sich zwischen der zweiten Lage 22 und der Tragschicht 2 des Faservorformlings 1 erfindungsgemäß mindestens die eine Trennschicht 3, die mittels des Näh- bzw. Stickprozesses an den Faservorformling 1 bzw. die Tragschicht 2 angebunden wird.

Unterhalb der Tragschicht 2 bilden sich infolge der Verkettung zwischen den Fixieroberfäden 18,19 und den Fixierunterfäden 20 eine Vielzahl von Schlaufen, von denen nur eine Schlaufe 23 der besseren zeichnerischen Übersichtlichkeit wegen mit einer Bezugsziffer versehen ist. Mittels der Schlaufen sind die Faserstränge 4 bis 16 unterhalb der Tragschicht 2 mit dieser verbunden bzw. fest an diese angeheftet. Zur Bildung von so genannten mehrschichtigen Faservorformlingen werden mehrere Faservorformlinge 1, bei denen vorab die Tragschichten 2 entfernt und die Fixierfäden 17 zumindest teilweise aufgeschmolzen wurden, übereinander angeordnet.

Die **Fig. 2** zeigt ein Ausführungsbeispiel einer Fixiereinrichtung, die zum Aufschmelzen zumindest eines Teils der Fixierfäden im Zuge der Durchführung des erfindungsgemäßen Verfahrens eingesetzt werden kann.

In die Fixiereinrichtung 24 ist bereits ein Faservorformling 25 mit einer Trennschicht 26, der mittels des bekannten TFP-Verfahrens hergestellt wurde, eingelegt. Der Faservorformling 25 weist einen Aufbau auf, der der Darstellung des Faservorformlings 1 in der Fig. 1 entspricht.

Die Fixiereinrichtung 24 umfasst unter anderem eine Unterlage 27, Dichtelemente 28,29 und eine Vakuumhülle 30 mit einem Vakuumanschluss 31. Weiterhin sind eine nicht dargestellte Heizeinrichtung sowie ein Temperaturfühler 32 vorgesehen. Mittels der Dichtelemente 28,29 wird die Vakuumhülle 30 hermetisch gegenüber der Umgebung abgeschlossen und mit der Unterlage 27 verbunden.

Zur Durchführung des Verfahrenabschnitts, der das zumindest teilweise Aufschmelzen der Fixierfäden betrifft, wird der mittels des TFP-Verfahrens gebildete Faservorformling 25 in einem ersten Verfahrensschritt in die Fixiereinrichtung 24 eingelegt. Um ein ungewolltes Anhaften des Faservorformlings 25 an anderen Komponenten der Anordnung zu vermeiden, wird dieser erforderlichenfalls zumindest teilweise mit Trennfolien 33,34 bedeckt. Die Trennfolien 33,34 verfügen über gute Antihafteigenschaften und können mit demselben Material wie die Trennschicht 26 gebildet sein. Die Trennfolien 33,34 können zum Beispiel mit einem PTFE-Material oder dergleichen gebildet sein. Um innerhalb der Vakuumhülle 30, insbesondere bei großflächigeren Faservorformlingen 25, überall einen ausreichend hohen Unterdruck zu gewährleisten, wird oberhalb des Faservorformlings 25 zumindest bereichsweise ein luftdurchlässiges Vlies 35 angeordnet, das im Wesentlichen die Funktion einer "Vakuum- bzw. Unterdruckdrainage" erfüllt. Infolge des luftdurchlässigen Vlieses 35 wirkt der Unterdruck gleichmäßig auf die gesamte Fläche des Faservorformlings 25.

In einem zweiten Verfahrensschritt wird an den Vakuumanschluss 31 ein Unterdruck angelegt. Dieser Unterdruck bewirkt, dass der Faservorformling 25 infolge des herrschenden Umgebungsluftdrucks fest zusammengedrückt und zugleich auf die Unterlage 27 gepresst wird, so dass unerwünschte Verschiebungen der Faserstränge weitgehend unterbleiben, bis die Fixierfäden zumindest teilweise aufgeschmolzen und das erkaltete Fixierfadenmaterial innerhalb des Faservorformlings 25 seine Bindewirkung entfaltet.

In einem dritten Verfahrensschritt wird die Fixiereinrichtung 24 mittels der Heizeinrichtung aufgeheizt, so dass die Fixierfäden zumindest teilweise im Faservorformling 25 aufschmelzen und diesen fixieren, das heißt insbesondere die räumliche Lage der Faserstränge zueinander sichern. Nach dem Abkühlen des Faservorformlings 25 kann dieser ohne die Gefahr von unkontrollierten Formänderungen aus der Fixiereinrichtung 24 herausgenommen werden, da eine ausreichende Formstabilität infolge der Bindewirkung des in den Faservorformling 25 eingedrungenen und erkalteten Fixierfadenmaterials gegeben ist. Die Fixierwirkung infolge des Aufschmelzens der Fixierfäden kann durch Beigabe eines Bindemittels in oder auf den Faservorformling 25 noch erhöht werden. Als Bindemittel kommen beispielsweise thermoplastische und/oder duroplastische Materialien, insbesondere in Pulver- oder Granulatform, in Betracht.

In einem vierten Verfahrensschritt wird schließlich die Tragschicht entfernt. Die Entfernung der Tragschicht ist infolge der Antihaftwirkung der Trennschicht 26 problemlos möglich. Insbesondere ermöglicht das Vorhandensein der Trennschicht 26 eine leichte und rückstandsfreie Ablösung der Tragschicht vom Faservorformling 25 ohne eine Beschädigung der Faserstränge, beispielsweise durch Spliss oder Bruch der Verstärkungsfasern. Die Unterlage 27 weist vorzugsweise eine Oberflächengeometrie auf, die in etwa der beabsichtigten Form des im Anschluss aus dem Faservorformling 25 zu fertigenden Verbundbauteils entspricht. Die Unterlage 27 kann zur Anpassung an Faservorformlinge mit unterschiedlichen Formen flexibel ausgebildet sein.

Der Ablauf des gesamten Verfahrens wird mittels einer nicht dargestellten Steuer- und Regeleinrichtung kontrolliert, die beispielsweise auch die vom Temperaturfühler 32 ermittelten Temperaturwerte erfasst und die mittels der Heizeinrichtung erfolgende Wärmezufuhr in den Faservorformling entsprechend den Vorgaben steuert. Mittels der Steuer- und Regeleinrichtung kann darüber hinaus auch die Oberflächengeometrie der Unterlage 27 rechnergesteuert an Faservorformlinge mit unterschiedlichen Formen angepasst werden. Die Steuer- und Regeleinrichtung kontrolliert und regelt die Abfolge der einzelnen Verfahrensschritte und gewährleistet somit einen bevorzugt vollautomatischen Ablauf des erfindungsgemäßen Verfahrens.

Der auf diese Weise gebildete Faservorformling 25 kann anschließend, nach einem gegebenenfalls noch erforderlichen Zuschnitt, unmittelbar mit einem aushärtbaren Kunststoffmaterial, beispielsweise mittels des bekannten RTM-Verfahrens ("Resin Moulding Transfer") zu einem fertigen Verbundbauteil in einer verschließbaren Form ausgehärtet werden. Als aushärtbares Kunststoffmaterial kommt beispielsweise ein Polyesterharz, ein Epoxydharz, ein BMI-Harz oder dergleichen in Betracht. Vor der endgültigen Fertigstellung des Verbundbauteils können mehrere Faservorformlinge zur Bildung von mehrschichtigen Faservorformlingen in der RTM-Form angeordnet werden. Die endgültige Fertigung des Verbundbauteils, das heißt die Imprägnierung des Faservorformlings 25 mit einem durch Vernetzung aushärtbaren Harzsystem und dessen Aushärtung erfolgt nicht in der Fixiereinrichtung 24, sondern in einer separaten, verschließbaren RTM-Form.

Die so gebildeten Faservorformlinge weisen nahezu optimale mechanische Eigenschaften auf, bei einem zugleich sehr geringen Gewicht. Insbesondere werden durch das Aufschmelzen zumindest eines Teils der Fixierfäden sowie der nachträglichen Ablösung der Tragschicht Inhomogenitäten bzw. Störstellen innerhalb des Faservorformlings weitgehend eliminiert, so dass ein "quasiisotroper" Faservorformling mit einer nahezu idealen, kraftflussorientierten Ausrichtung der Verstärkungsfasern entsteht, der hiermit gefertigten Verbundbauteilen einen nahezu optimalen Laminataufbau verleiht. Nach dem erfindungsgemäßen Verfahren hergestellte Verbundbauteile können dabei hohe Materialstärken durch das Übereinanderanordnen von mehreren Faservorformlingen aufweisen. Zudem wird die Entstehung von Delaminationen, die bei den bekannten Faservorformlingen im Bereich der Tragschichten auftreten können, vermieden.

Demzufolge sind die mittels des erfindungsgemäßen Verfahrens hergestellten Faservorformlinge zur Herstellung von Verbundbauteilen für mechanisch hoch beanspruchte, tragende Komponenten im Bereich der Luft- und Raumfahrt prädestiniert.

## Patentansprüche

1. Verfahren zur Herstellung von ein- oder mehrschichtigen Faservorformlingen (1,25) im Tailored Fiber Placement-Verfahren, TFP-Verfahren mit im Wesentlichen kraftflussorientiert ausgerichteten Fasersträngen (4-16), die auf einer eine Trennschicht (3,26) aufweisenden Tragschicht (2) abgelegt und mit Fixierfäden (17), insbesondere mit mindestens einem Fixieroberfaden (18,19) und mindestens einem Fixierunterfaden (20), angeheftet werden, um einen Faservorformling (1,25) mit einer nahezu beliebigen Materialstärke zu bilden, umfassend die folgenden Schritte:
a) Aufbringen einer Trennschicht (3,26) in Form einer PTFE-Folie auf die Tragschicht (2),
b) Ablegen des Faservorformlings (1,25) im TFP-Verfahren auf der Trennschicht (3,26),
c) Einbringen des Faservorformlings (1,25) nach der Beendigung des TFP-Verfahrens in eine Fixiereinrichtung (24),
d) Aufschmelzen zumindest eines Teils der Fixierfäden (17) in der Fixiereinrichtung (24) durch Wärmezufuhr, und
e) Ablösen der mittels der Trennschicht (3,26) vom Faservorformling (1,25) separierten Tragschicht (2) vom Faservorformling (1,25).

2. Verfahren nach Anspruch 1, **dadurch gekennzeichnet, dass** die räumliche Lage der Faserstränge (4-16) in der Fixiereinrichtung (24) vor dem zumindest teilweisen Aufschmelzen der Fixierfäden (17) durch Anlegen eines Unterdrucks gesichert wird.

3. Verfahren nach Anspruch 1 oder 2, **dadurch gekennzeichnet, dass** zumindest die Fixieroberfäden (18,19) und/oder die Fixierunterfäden (20) zur Sicherung der räumlichen Lage der Faserstränge (4-16) in der Fixiereinrichtung (24) zumindest teilweise aufgeschmolzen werden.

4. Verfahren nach einem der Ansprüche 1 bis 3, **dadurch gekennzeichnet, dass** die räumliche Lage der Faserstränge (4 bis 16) in der Fixiereinrichtung (24) durch ein zusätzliches Bindemittel, insbesondere ein thermoplastisches Material und/oder ein duroplastisches Material, gesichert wird.

5. Verfahren nach einem der Ansprüche 1 bis 4, **dadurch gekennzeichnet, dass** die Fixierfäden (17) mit einem leicht aufschmelzbaren Material, insbesondere einem thermoplastischen Material, einem Schmelzgarn oder dergleichen, gebildet werden.

6. Verfahren nach einem der Ansprüche 1 bis 5, **dadurch gekennzeichnet, dass** mindestens zwei Faservorformlinge (1,25) zur Bildung eines mehrschichtigen Faservorformlings übereinander angeordnet werden.

## Claims

1. A Method for producing single- or multi-layered fibre preforms (1, 25) by the TFP process using essentially power flow oriented fibre strands (4-16) being placed on a carrier layer (2) which is provided with a separation layer (3, 26) and being affixed using locating threads (17), in particular using at least one upper locating thread (18,19) and at least one lower locating thread (20), to provide a fibre preform (1, 25) having an almost arbitrary material thickness, the method comprising the following steps:
a) applying a separation layer (3, 26), in form of a PTFE-foil onto the carrier layer (2);
b) depositing the fibre preform (1, 25) according to the TFP-process onto the separation layer (3, 26);
c) placing the fibre preform (1, 25) in a locating apparatus (24) after finishing the TFP-process;
d) melting at least a portion of the locating threads (17) in the locating apparatus (24) by heat input; and
e) detaching the carrier layer (2), which is separated from the fibre preform (1, 25) by the separation layer (3, 26), from the fibre preform (1, 25).

2. The method according to claim 1, **characterised in that** the spatial orientation of the fibre strands (4-16) in the locating apparatus (24) before fusing at least a portion of the locating threads (17) is ensured by applying a low-pressure.

3. The method according to claim 1 or 2, **characterised in that** at least the upper locating threads (18, 19) and / or the lower locating threads (20) being at least partially fused in the locating apparatus (24) for ensuring the spatial orientation of the fibre strands (4-16).

4. The method according to claims 1 to 3, **characterised in that** the spatial orientation of the fibre strands (4-16) in the locating apparatus (24) being ensured by an accessory binder, in particular by a thermoplastic material and / or a duroplastic material.

5. The method according to claims 1 to 4, **characterised in that** the locating threads (17) are made from a material that is meltable easily, in particular from a thermoplastic material, a fusible yarn, or the like.

6. The method according to claims 1 to 5, **characterised in that** at least two fibre preforms (1, 25) being positioned one upon the other to provide a multilayered fibre preform.

## Revendications

1. Procédé de production d'ébauches de fibre (1,25) monocouches ou multicouches selon le procédé Tailored Fiber Placement, procédé TFP comprenant essentiellement des brins (4 à 16) qui sont orientés dans le flux de force et qui sont déposés sur une couche support (2) présentant une couche de séparation (3,26) et attachés par des fils de fixation (17), en particulier avec au moins un fil de fixation supérieur (18,19) et au moins un fil de fixation inférieur (20), pour former une ébauche de fibre (1,25) d'une épaisseur quasi quelconque, comportant les étapes suivantes :
a) application d'une couche de séparation (3,26) sous forme de film de PTFE sur la couche support (2),
b) dépôt de l'ébauche de fibre (1,25) selon le procédé TFP sur la couche de séparation (3,26),
c) passage de l'ébauche de fibre (1,25) après achèvement du procédé TFP dans un dispositif de fixation (24),
d) fusion d' au moins une partie des fils de fixation (17) dans le dispositif de fixation (24) par apport de chaleur, et
e) détachement de la couche support (2) séparée de l'ébauche de fibre (1,25) à l'aide de la couche de séparation (3,26) de l'ébauche de fibre (1,25).

2. Procédé selon la revendication 1, **caractérisé par le fait que** la position spatiale des brins de fibre (4 à 16) dans le dispositif de fixation (24) avant la fusion au moins partielle des fils de fixation (17) est assurée par l'application d'une dépression.

3. Procédé selon la revendication 1 ou 2, **caractérisé par le fait qu'**au moins les fils de fixation supérieurs (18, 19) et/ou les fils de fixation inférieurs (20) destinés à sécuriser la position spatiale des brins de fibre (4-16) dans le dispositif de fixation (24) sont au moins partiellement mis en fusion.

4. Procédé selon une des revendications 1 à 3, **caractérisé par le fait que** la position spatiale des brins de fibre (4 à 16) est sécurisée dans le dispositif de fixation (24) par un liant supplémentaire, en particulier un matériau thermoplastique et/ou un matériau thermodurcissable.

5. Procédé selon une des revendications 1 à 4, **caractérisé par le fait que** les fils de fixation (17) sont formés d'un matériau pouvant être facilement mis en fusion, en particulier d'un matériau thermoplastique, d'une fibre thermo-fusible ou similaire.

6. Procédé selon une des revendications 1 à 5, **caractérisé par le fait qu'**au moins deux ébauches de fibre (1,25) sont disposées l'une sur l'autre dans le dispositif de fixation de façon à former une ébauche fibreuse multicouches.
